## Europäisches Patentamt
## European Patent Office
## Office européen des brevets

(19)

(11) Numéro de publication: **0 082 052 B1**

(12)

# FASCICULE DE BREVET EUROPEEN

(45) Date de publication du fascicule du brevet:
19.02.86

(51) Int. Cl.⁴: **G 02 F 1/17**

(21) Numéro de dépôt: **82402216.4**

(22) Date de dépôt: **03.12.82**

(54) **Dispositif de visualisation électrochromique à commande thermoélectrique.**

(30) Priorité: **15.12.81 FR 8123437**

(43) Date de publication de la demande:
**22.06.83 Bulletin 83/25**

(45) Mention de la délivrance du brevet:
**19.02.86 Bulletin 86/8**

(84) Etats contractants désignés:
**DE GB**

(56) Documents cités:
**FR - A - 1 594 584
FR - A - 1 600 894
FR - A - 2 373 076
GB - A - 945 648
US - A - 3 704 057**

**APPLIED PHYSICS LETTERS, vol. 37, no. 10, 15 novembre 1980, pages 965-967, New York, USA S. HACKWOOD et al.: "Temperature dependence of electrochromic processes in iridium oxide displays"**

(73) Titulaire: **THOMSON-CSF, 173, Boulevard Haussmann, F-75379 Paris Cedex 08 (FR)**

(72) Inventeur: **Moutou, Paul, THOMSON-CSF SCPI 173, bld Haussmann, F-75379 Paris Cedex 08 (FR)**
Inventeur: **Hareng, Michel, THOMSON-CSF SCPI 173, bld Haussmann, F-75379 Paris Cedex 08 (FR)**

(74) Mandataire: **Wang, Pierre et al, THOMSON-CSF SCPI 173, Bld Haussmann, F-75379 Paris Cedex 08 (FR)**

## Description

La présente invention se rapporte aux cellules de visualisation électrochromique et particulièrement aux dispositifs à accès matriciel. Ces dispositifs sont des dispositifs modulateurs de la lumière incidente et possèdent um excellent contraste pour les angles de vue très larges. Ils sont également caractérisés par des tensions de seuil faibles, de l'ordre de 1 V environ. Ils peuvent aussi présenter un effet de mémoire ou de persistance et demandent relativement peu de puissance pour le maintien de l'information.

On dit d'un matèriau qu'il est électrochromique quand il change de teinte ou de coleur sous l'effet du passage d'un courant électrique ou par l'application d'un champ électrique. Différents mécanismes physiques sont responsables d'un effet électrochromique dans des solides, des liquides, des matériaux organiques ou inorganiques.

Dans les solides, la plupart des phénomènes électrochromiques concernent la création de centres de couleur, ou le transfert de charges entre centres d'impuretés ce qui provoque la suppression d'une bande d'absorption et la création d'une nouvelle bande.

Dans les liquides, les phénomènes impliqués sont généralement de nature électrochimique ce qui conduit à les qualifier par le terme électrochémichromique. Deux effets sont à considérer principalement:

– des réactions d'oxydo-réduction par lesquelles des espèces non colorées sont réduites ou oxydées en espèces colorées,

– un effet de métallisation à cause d'une réaction d'oxydo-réduction où des ions métalliques se déposent sur une électrode pour former une couche métallique.

Les systèmes les plus performants sont ceux relatifs à l'effet de centres de couleur dans les solides et aux phénomènes électrochimiques d'oxydo-réduction dans les liquides ou les solides.

On peut citer comme appartenant à l'art connu, le brevet FR-A-1594 584 qui décrit un système d'affichage comportant un matériau à l'état solide susceptible de modifier localement sa coloration sous l'influence d'une tension électrique appliquée par l'intermédiaire d'une matrice à deux jeux d'électrodes croisées. L'effaçage peut se produire par chauffage.

L'invention concerne les systèmes basés sur le déplacement d'ions dans les solides ou les liquides.

Jusqu'ici tous les dispositifs de ce type proposés ont deux particularités qui limitent leurs applications:

– des temps de réponse relativement longs, de l'ordre de la seconde à la fraction de seconde à la température ambiante,

– pas de seuil très net de l'effet car la densité optique est fonction de la charge totale ayant traversé la cellule et dépend donc du courant et de son temps d'application.

La présente invention a pour but de surmonter ces deux obstacles. Elle est basée sur le fait que le temps de réponse est donné par la diffusion des ions dans le matériau et que le coefficient de diffusion des ions est une fonction très rapide, de type exponentiel, de la température. Le dispositif de visualisation selon l'invention propose de chauffeur le matériau électrochromique pendant un temps court afin d'abaissser la durée d'application de la tansion de commande et d'obtenir de ce fait des systèmes de visualisation plus rapides. Le chauffage peut être obtenu par le passage d'un courant électrique dans l'une des électrodes servant à appliquer la tension de commande au matériau électrochromique.

L'invention a donc pour objet un dispositif de visualisation à commande électrique du type comprenant un matériau électrochromique agencé entre des électrodes supportées par deux lames dont l'une au moins est transparente, lesdites électrodes étant reliées à une source de tension et étant destinées à produire un déplacemant d'ions par diffusion modifiant l'aspect dudit matériau, ledit dispositif comprenant en outre des moyens de chauffage, lesdites électrodes appartenant à deux jeux d'électrodes croisées, caractérisé en ce que lesdits moyens de chauffage sont constitués par les électrodes de l'un desdits jeux, lesquelles sont successivement parcourues par un courant électrique de chauffage; la durée d'application de la tension déplaçant les ions étant choisie pour subordonner ledit déplacement au passage dudit courant, électrique de chauffage.

L'invention sera mieux comprise au moyen de la description ci-après et des figures annexées parmi lesquelles:

– la figure est une vue en coupe d'une cellule utilisant le phénomène d'électrochromisme,

– la figure 2 est un diagramme qui représente la quantité d'ions migrant en fonction du temps,

– la figure 3 est un dispositif selon l'invention et son système de commande.

De nombreuses cellules de visualisation utilisant les propriétés des matériaux électrochromique ont été proposées. Elles emploient divers types de matériaux. Deux types de cellules sont particulièrement intéressantes: celles utilisant le principe de la fixation permanente sur l'électrode et celles utilisant le principe du dépôt métallique.

Dans le premier type de cellules, deux électrodes plongent dans un électrolyte. Une mince couche de matériau électrochrome a été déposée sur une des électrodes sous la forme d'un film de 0,1 à 5 microns d'épaisseur. Ce matériau est un solide insoluble dans l'électrolyte choisi. On trouve dans cette classe des bronzes de tungstène qui changent de couleur par adjonction de cations: soit $H^+$, soit $Na^+$ ou $Li^+$ dans le cas d'électrolytes solides, ou encore les systèmes basés sur l'oxyde et l'hydroxyde d'iridium. Dans le cas des bronzes de tungstène, la formule générale de la réaction est la suivante:

$$WO_3 + xM^+ + xe^- \rightarrow Mx\,WO_3$$ où $M^+$ est un ion métallique ou un proton.

D'autres chercheurs utilisent des composés organo-métalliques, par exemple le diphthalocyanine de lutétium de formule générale $LuPc_2H$ dont

le fonctionnement dépend du transport d'anions tels que $Cl^-$, $SO^{--}_4$, $HSO^-_3$, etc.

Dans le deuxième type de cellules, le matériau électrochrome est dissous dans un électrolyte au repos. Le passage d'un courant électrique provoque une réaction électrochimique qui donne naissance à une espèce insoluble qui se fixe sur une électrode: c'est le cas des produits connus sous le nom de viologène qui sont des composés du dipyridinium.

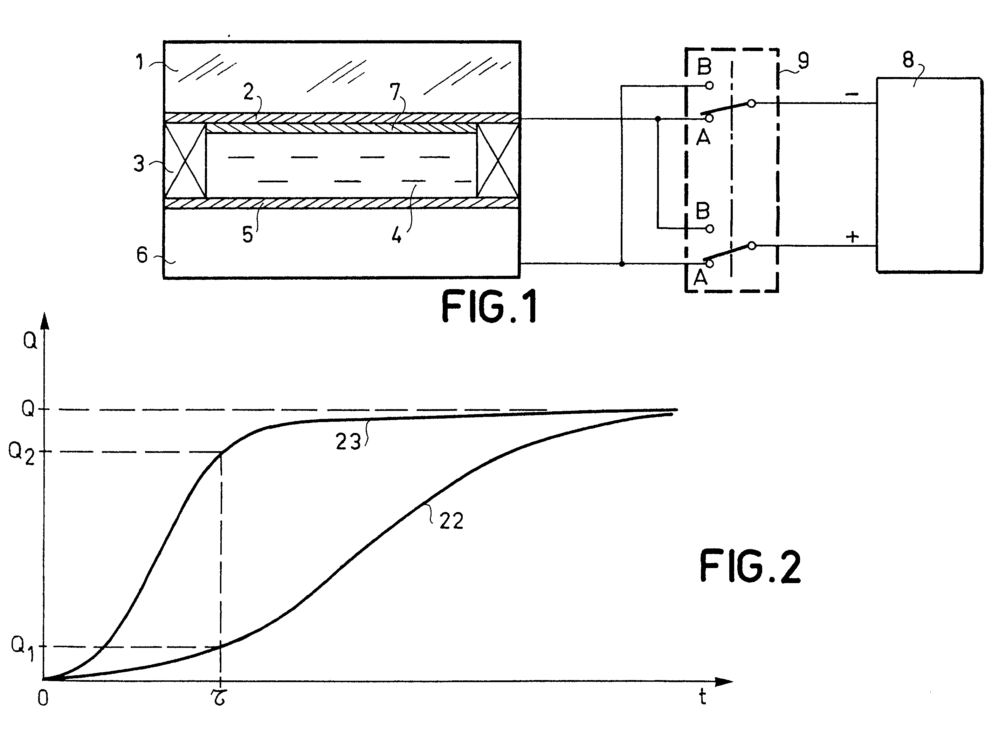

La figure 1 est une vue en coupe d'une cellule utilisant le phénomène d'electrochromisme. Sur un substrat transparent 1 on a déposé une couche conductrice transparente 2 qui a elle-même reçu un dépôt 7 de trioxyde de tungstène $WO_3$ incolore à l'état de repos. La lame 6 supporte une couche conductrice 5 et cet ensemble forme une contre-électrode. La lame 6 peut être de l'acier inoxydable et la couche 5 un film de carbone. Des cales d'épaisseur 3 définissent un espace qui contient un électrolyte 4. La cellule est branchée à un générateur de tension continue 8 par l'intermédiaire d'un inverseur 9.

Les mécanismes de l'électrochromisme impliquent la conception du phénomène de double injection d'électrons et de protons ou d'ions dans le film de trioxyde de tungstène. Lorsque l'inverseur 9 est dans la position A, le générateur délivre un potentiel négatif sur l'électrode 2 et un potentiel positif sur la contre-électrode. Dans ce cas, des électrons sont injectés de l'électrode 2 et des ions ou des protons de l'électrolyte acide dans le film de trioxyde de tungstène. Ce phénomène se prolonge jusqu'à ce que le trioxyde de tungstène $WO_3$ soit transformé en bronze de tungstène $Mx\,WO_3$ qui est coloré. L'effacement est réalisé en inversant les polarités de façon à ce que les électrons et les ions quittent le film de trioxyde de tungstène et retournent à leurs lieux d'origine. La vitesse de déplacement des électrons étant plus grande que celle des ions, ce sont ces derniers qui déterminent les vitesses d'inscription et d'effacement.

Afin d'éviter le phénomène de transport de charges dans l'électrolyte, celui-ci doit posséder une faible résistance électrique. Il peut être liquide ou solide. La contre-électrode doit être choisie de façon à éviter l'établissement d'une barrière de potentiel au niveau de son contact avec l'électrolyte. L'électrode transparente 2, réalisée par exemple en oxyde mixte d'indium et d'étain, assure un contact ohmique avec le film de matériau électrochromique. Sa résistance doit être faible parce que le système fonctionne en courant.

Pour un fonctionnement en réflexion, la lumière incidente à la cellule passe à travers la lame transparente 1, l'électrode 2, la couche d'électrochrome 7 et est réfléchie soit par l'électrolyte, soit par la contre-électrode. Pour un fonctionnement en transmission, il faut disposer d'un électrolyte et d'une contre-électrode transparents.

La solution consistant à choisir un électrolyte liquide pose le problème de la protection des électrodes contre l'environnement acide, surtout lorsque l'electrolyte contient de l'acide sulfurique.

Le temps de réponse $\tau$ d'une telle cellule est relativement long à la température ambiante, de l'ordre de grandeur de la seconde. On a établi que:

$$\tau = \frac{1^2}{4_D}$$

où 1 est l'épaisseur du film de matériau électrochrome en cm et D le coefficient de diffusion des protons ou des ions dans ledit film en $cm^2/s$. Ce coefficient de diffusion est donné par une expression du type:

$$D = Do.\exp\left(\frac{-\Delta E}{kT}\right)$$

où $\Delta E$ est une énergie d'activation. On connaît assez mal les valeurs de ce coefficient D mais on sait qu'il est plus grand pour les anions que pour les cations et qu'il peut y en avoir au moins deux, un fort pour la diffusion intergranulaire et un autre bien plus faible pour la diffusion dans les grains constituant la couche. Dans le cas de l'oxyde de tungstène, l'énergie d'activation est d'environ 1,2 eV. En passant de la température ambiante (20°C) à 100°C, le coefficient D est multiplié par environ $2.10^4$.

Les ions sont les particules qui déterminent le changement de coloration. La qualité de ce changement de coloration est fonction du nombre d'ions qui ont migrés de l'électrolyte dans le film de trioxyde de tungstène. La figure 2 montre, pour la cellule représentée à la figure 1, des courbes qui donnent l'allure de la quantité Q d'ions ayant migrés en fonction du temps t avec comme paramètre la température. La courbe 22 a été tracée pour la température ambiante T (20°C) et la courbe 23 pour une température $T + \Delta T = 100°C$. A l'instant t = 0, c'est-à-dire l'instant où l'on applique un potentiel négatif sur l'électrode 2 et un potentiel positif sur la contreélectrode, la quantité Q est nulle. Cette quantité augmente avec le temps vers une valeur asymptotique Q. On constate que pour un temps donné $\tau$ d'application de la tension de commande, à la température T, la quantité d'ions $Q_1$ ayant migrés représente environ 10% de la quantité à saturation Q. Pour ce même temps $\tau$, à la température $T+\Delta T$ la quantité $Q_2$ représente environ 90% de Q. On peut admettre que cette valeur représente un bon niveau de l'état d'excitation de la cellule. Sans l'apport de température $\Delta T$ la cellule serait au bout du temps $\tau$ dans un état qui peut être considéré comme l'état de repos. On peut également admettre que l'effet inverse effet de décoloration obtenu en inversant les polarités de la tension de commande se produit au bout de périodes de temps du même ordre de grandeur.

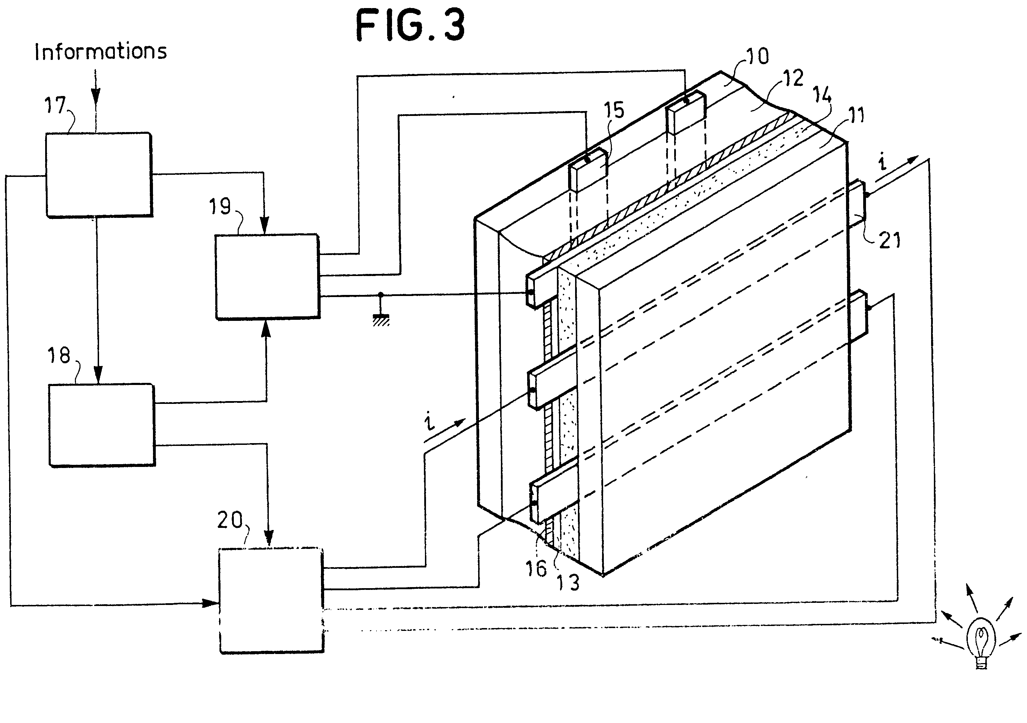

Les conclusions du paragraphe précédent sont mises à profit pour réaliser l'écran matriciel représenté par la figure 3. Cette figure montre également le système de commande de l'écran ainsi réalisé.

L'écran matriciel envisagé est défini par deux groupes de conducteurs se croisant orthogonalement: des connexions de lignes 21 et des connexions de colonnes 15, supportées respectivement par deux lames parallèles 11 et 10. Sur la figure 3, on n'a représenté que 2 lignes et 2 colonnes pour ne pas surcharger la figure et pour une meilleure compréhension du dispositif. On a également omis de représenter le dispositif de scellement de l'écran. On peut à cet effet utiliser une résine époxy. L'espace séparant ces deux lames est défini par des cales d'épaisseur non représentées. Il peut varier de 0,1 à 10 mm. Dans cette réalisation, ce sont les lignes qui ont été choisies pour assurer le chauffage du film de matériau électrochrome 16. La lumière incidente à l'écran rencontre d'abord la lame transparente 11 puis les bandes chauffantes transparentes 21, la couche 14 également transparente et isolante électriquement. Elle traverse ensuite l'électrode transparente 13, la couche électrochromique 16 pour atteindre l'électrolyte 12.

L'électrolyte peut être solide ou liquide. Pour cette réalisation, on a choisi un électrolyte solide: le béta-alumine ($\beta$-$Al_2O_3$). Ce matériau étant opaque, le dispositif fonctionnera par diffusion de la lumière. Les cellules utilisant cet électrolyte sont basées sur le phénomène de déplacement d'ions $Na^+$ à travers le béta-alumine. On utilise une lame de béta-alumine d'environ 1 mm d'épaisseur sur laquelle on dépose par évaporation une couche de trioxyde de tungstène de 0,3 à 1 $\mu$m d'épaisseur. Sur cette couche, on dépose ensuite un revêtement conducteur transparent 13. Ce conducteur étant en contact avec l'électrolyte et avec la couche de trioxyde de tungstène, doit être choisi avec soin. En effet l'électrode 13 ne peut pas être réalisée en oxyde mixte d'étain et d'indium, ce qui est généralement le cas lorsque l'on désire une électrode transparente, mais plutôt en oxyde d'étain $SnO_2$ qui est un matériau très stable. Il peut être déposé par décomposition pyrolitique de solutions de tétrachlorure d'étain. On peut y ajouter du trichlorure d'antimoine en tant que dopant pour augmenter la conductivité du matériau.

Les colonnes 15 forment la contre-électrode de l'écran. Elles sont formées de dépôts d'un bronze de tungstène de formule $Na_x WO_3$ dans laquelle la valeur de x est d'environ 0,2. On peut éventuellement déposer une autre couche de trioxyde de tungstène sur les colonnes afin de disposer d'un système symétrique. Les ions $Na^+$ migrent alors d'une couche électrochrome à l'autre suivant la polarité de la tension appliquée.

La couche 14 est isolante électriquement mais doit être un bon conducteur thermique. On peu utiliser à cet effet de la glucine (oxyde de béryllium). La lame 11 est isolante et transparente. Elle peut être réalisée en verre, de même que la lame 10.

Les connexions de lignes 21 sont des bandes chauffantes transparentes. Il est avantageux de les réaliser en oxyde mixte d'étain et d'indium et de les déposer par photolithographie.

Le signal électrique incident représentatif des caractères ou de l'image à afficher est d'abord reçu par un circuit 17 qui sépare les signaux affectés aux lignes de ceux affectés aux colonnes. Les signaux permettant d'appliquer les tensions de commande à chaque élément de l'écran défini géométriquement par l'intersection d'une ligne et d'une colonne, sont envoyés vers un circuit 19 possédant une memoire tampon. Ces tensions de commande seront appliquées au moment voulu entre les colonnes 15 et l'électrode 13 qui est mise à la masse. Les signaux correspondant à la commande du courant de chauffage i qui traverse successivement chaque ligne sont dirigés vers le circuit 20. Une horloge 18 permet la coordination des signaux électriques de commande par son action sur les circuits 19 et 20 en fonction des opérations effectuées par le circuit séparateur 17. L'ordre des opérations est le suivant: d'abord chauffage d'une ligne pendant que les tensions de commande des éléments de cette ligne sont accumulées dans la mémoire tampon du circuit 19, ensuite application des tensions de commande entre les colonnes et l'électrode 13. L'opération suivante est la commutation du courant de chauffage i dans la ligne suivante. En traversant une connexion de ligne, le courant i provoque son échauffement. La chaleur ainsi dégagée est communiquée par l'intermédiaire de la couche 14 et de l'électrode 13 à la partie de la couche électrochromique 16 en regard de la ligne chauffée. L'apport de chaleur a pour effet d'augmenter le coefficient de diffusion des ions dans le matériau électrochrome et par conséquent le temps de réponse $\tau$ du dispositif.

L'électrode 13 sert d'écran entre les tensions vidéo éppliquées aux colonnes et les tensions de chauffage lignes. Celles-ci peuvent être grandes par rapport aux tensions vidéo et sans la présence de l'électrode 13, il pourrait y avoir des interférences entre les tensions nécessaires au chauffage et les tensions vidéo. En effet dans le cas d'un écran à vision directe de 10 cm de côté et possédant des connexions de ligne de 0,325 mm de largeur, la puissance de chauffage lignes est de l'ordre de 15 W avec des bandes ITO de faible résistance, on arrive à des tensions de chauffage (tensions aux bornes de chaque ligne) de l'ordre de 80 V.

Lors de l'inscription l'électrode 13 peut être réunie à la masse. Lors de l'effacement elle peut éventuellement être portée à un potentiel positif par rapport à l'ensemble des colonnes.

La couche 14 sert à isoler électriquement les lignes chauffantes de l'écran 13. Elle est réalisée en glucine et son épaisseur doit être suffisante pour éviter les tensions de claquage qui pourraient se produire entre les connexions de lignes 21 et l'électrode 13. La tension de claquage de la glucine telle qu'on la trouve dans le commerce est d'environ 20 kV/mm. La couche 14 devra donc être supérieure à 4 microns pour supporter les tensions électriques présentes sur chacune de ses faces.

Les tensions vidéo agissent sur les éléments de la ligne chauffée, permettant ainsi l'inscription de l'image. Du fait de l'uniformité de l'électrode 13 et de la faible résistance de l'électrolyte, ces tensions agissent également sur les élément des lignes non chauffantes mais beaucoup plus lentement. Cet effet cumulatif parasite est sans importance tant que le nombre de lignes N de l'écran reste très inférieur au rappport $D_T max/D_T moy$, avec $D_Tmax$ = coefficient de diffusion des ions pour la température maximale à laquellle est portée la couche 16 (température d'inscription) et $D_{T moy}$ = coefficient de diffusion à la température ambiante. Autrement dit, l'élévation de température des lignes doit être d'autant plus forte que leur nombre N est grand.

Il entre également dans le cadre de l'invention d'utiliser d'autres matériaux électrochromes que le trioxyde de tungstène, par exemple l'oxyde et l'hydroxyde d'iridium, des composés organo-métalliques tel le diphthalocyanine de lutétium. On peut également utiliser d'autres électrolytes: par exemple à base de fluorure et de nitrure de lithium et avoir le schéma suivant: électrode $ITO/WO_3/LiF/Li_3N/LiF/Ni$ (contre-électrode).

Il est aussi du domaine de l'invention de réaliser un écran fonctionnant en transmission. Dans ce cas tous les composants de l'écran doivent être transparents.

Un dispositif de visualisation à écran électrochromique selon l'invention présente l'avantage d'avoir un temps de réponse beaucoup plus rapide que les systèmes à écran électrochromique classiques dont l'inconvénient majeur est de posséder un temps de réponse de l'ordre de la seconde.

**Revendications**

1. Dispositif de visualisation à commande électrique du type comprenant un matériau électrochromique agencé entre des électrodes (15, 21) supportées par deux lames (10, 11) dont l'une au moins est transparente lesdites électrodes étant reliées à une source de tension et étant destinées à produire un déplacement d'ions par diffusion modifiant l'aspect dudit matériau, ledit dispositif comprenant en outre des moyens de chauffage, lesdites électrodes (15, 21) appartenant à deux jeux d'électrodes croisées, caractérisé en ce que lesdits moyens de chauffage sont constitués par les électrodes (21) de l'un desdits jeux, lesquelles sont successivement parcourues par un courant électrique de chauffage; la durée d'application de la tension déplaçant les ions étant choisie pour subordonner ledit déplacement au passage dudit courant électrique de chauffage.

2. Dispositif de visualisation selon la revendication 1, caractérisé en ce qu'il comporte un moyen (9) permettant d'inverser les polarités de ladite tension afin d'assurer au choix l'inscription ou l'effacement.

3. Dispositif de visualisation selon l'une des revendications 1 ou 2, caractérisé en ce que ledit matériau électrochromique est constitué par une couche électrochrome (16) et un électrolyte (12).

4. Dispositif de visualisation selon la revendication 3, caractérisé en ce que lesdites lames, lesdites électrodes et l'électrolyte (12) faisant partie du matériau électrochromique sont transparents.

5. Dispositif de visualisation selon l'une quelconque des revendications 1 à 4, caractérisé en ce qu'une électrode transparente additionelle (13) est disposée entre ledit matériau électrochromique et les électrodes chauffantes (21) et est séparée desdites électrodes chauffantes (21) par un isolant électrique transparent (14) qui est un bon conducteur thermique, la tension de commande étant appliquée entre les électrodes non chauffantes (15) et l'électrode additionelle (13).

**Patentansprüche**

1. Elektrisch steuerbare Anzeigevorrichtung mit einem Elektrocolormaterial, das zwischen Elektroden (15, 21) liegt, die von zwei Lamellen (10, 11) getragen werden, von denen mindestens eine transparent ist, wobei die Elektroden an eine Spannungsquelle angeschlossen sind und eine Ionenverschiebung durch Diffusion bewirken sollen, durch die sich der Aspekt des Materials verändert, und wobei die Vorrichtung ausserdem Heizmittel aufweist und die Elektroden (15, 21) zu zwei Scharen gekreuzter Elektroden gehören, dadurch gekennzeichnet, dass die Heizmittel von den Elektroden (21) der einen Schar gebildet werden, die nacheinander von einem elektrischen Heizstrom durchflossen werden, wobei die Dauer, während der die Spannung zur Verschiebung der Ionen angelegt ist, so gewählt wird, dass die Ionenverschiebung dem Durchgang des elektrischen Heizstroms untergeordnet wird.

2. Anzeigevorrichtung nach Anspruch 1, dadurch gekennzeichnet, dass sie ein Mittel (9) aufweist, mit dem es möglich ist, die Polaritäten der Spannung umzukehren, um wahlweise das Einschreiben oder das Löschen sicherzustellen.

3. Anzeigevorrichtung nach einem der Ansprüche 1 oder 2, dadurch gekennzeichnet , dass das Elektrocolormaterial aus einer Elektrocolorschicht und einem Elektrolyten (12) besteht.

4. Anzeigevorrichtung nach Anspruch 3, dadurch gekennzeichnet, das die Lamellen, die Elektroden und der Elektrolyt (12), die zum Elektrocolormaterial gehören, transparent sind.

5. Anzeigevorrichtung nach einem beliebigen der Ansprüche 1 bis 4, dadurch gekennzeichnet, dass eine zusätzliche transparente Elektrode (13) zwischen dem Elektrocolormaterial und den Heizelektroden (21) liegt und von diesen Heizelektroden (21) durch eine transparente elektrisch isolierende Schicht (14), die ein guter Wärmeleiter ist, getrennt ist, wobei die Steuerspannung zwischen die nicht heizenden Elektroden (15) und die zusätzliche Elektrode (13) angelegt wird.

**Claims**

1. An electrically controlled display device of the type comprising an electrocolor material arranged between electrodes (15, 21) which are supported by two lamellae (10, 11), at least one of which is transparent, said electrodes being connected to a voltage source and being conceived to produce a ion displacement by diffusion, thus modifying the aspect of said material, said device further comprising heating means, said electrodes (15, 21) belonging to two sets of intersecting electrodes, characterized in that said heating means are constituted by the electrodes (21) of one of said sets, an electric heating current passing successively through said electrodes, the duration of the voltage which displaces the ions being chosen in order to subordonate said displacement to the passage of said electric heating current.

2. A display device according to claim 1, characterized in that it comprises a means (9) for inverting the polarities of said voltage in order to ensure the inscription or the cancelling as a matter of choice.

3. A display device according to one of claims 1 or 2, characterized in that said electrocolor material is constituted by an electrocolor layer (16) and an electrolyte (12).

4. A display device according to claim 3, characterized in that said lamellae, said electrodes and the electrolyte (12) belonging to the electrocolor material are transparent.

5. A display device according to any one of claims 1 to 4, characterized in that an additional transparent electrode (13) is disposed between said electrocolor material and the heating electrodes (21) and is separated from that heating electrodes (21) by a transparent electrically insulating layer (14) which is a good thermal conductor, the control voltage being applied between the electrodes (15) which do not heat the material, and the additional electrode (13).

FIG.1

FIG.2

# FIG.3

Informations

0082052